# EUROPEAN PATENT APPLICATION

(11) **EP 4 138 050 A1**
(43) Date of publication of application: **22.02.2023**
(21) Application number: 22178006.7
(22) Date of filing: 09.06.2022
(51) Int. Cl.: G06V 30/412, G06V 30/413, G06V 30/416, G06V 10/80, G06F 40/103, G06F 40/177, G06F 40/18

(54) **TABLE GENERATING METHOD AND APPARATUS, ELECTRONIC DEVICE, STORAGE MEDIUM AND PRODUCT**

(30) Priority: 17.08.2021 CN 202110945523
(71) Applicant: Beijing Baidu Netcom Science and Technology Co., Ltd., Beijing 100085 (CN)
(72) Inventor: YU, Yuechen, Beijing 100085 (CN); LI, Yulin, Beijing 100085 (CN); ZHANG, Chengquan, Beijing 100085 (CN); YAO, Kun, Beijing 100085 (CN)
(74) Representative: Gill Jennings & Every LLP

(57) **Abstract**

The present disclosure provides a table generating method and apparatus, an electronic device, a storage medium and a product, and relates to the field of artificial intelligence, specifically to the field of computer vision and deep learning technology, which can be applied to scenarios of smart cities and AiFinance. A specific implementation is: recognizing at least one table object in a to-be-recognized image and obtaining a table property respectively corresponding to the at least one table object, where the table property of any table object includes a cell property or a non-cell property; determining at least one target object with the cell property in the at least one table object; determining a cell region respectively corresponding to the at least one target object to obtain cell position information respectively corresponding to the at least one target object; generating a spreadsheet corresponding to the to-be-recognized image according to the cell position information respectively corresponding to the at least one target object. The technical solution of the present disclosure improves accuracy of table generating.

## Description

### TECHNICAL FIELD

The present disclosure relates to the field of artificial intelligence technology, specifically to the field of computer vision and deep learning technology, and can be applied to scenarios of smart cities and AiFinance, and in particular, relates to a table generating method and apparatus, an electronic device, a storage medium and a product.

### BACKGROUND

OCR (Optical Character Recognition) technology refers to a process in which an electronic device detects characters printed on a paper, determines table shape of an image by detecting patterns such as light and dark, and then obtains text expressed in computer language using a character recognition method.

In the prior art, accuracy of a recognition method for table recognition with OCR technology is not high, and recognition precision is poor.

### SUMMARY

The present disclosure provides a table generating method and apparatus, an electronic device, a storage medium and a product.

According to a first aspect of the present disclosure, a table generating method is provided, including:
recognizing at least one table object in a to-be-recognized image and obtaining a table property respectively corresponding to the at least one table object; where the table property of any table object includes a cell property or a non-cell property;
determining at least one target object with the cell property in the at least one table object;
determining a cell region respectively corresponding to the at least one target object and obtaining cell position information respectively corresponding to the at least one target object;
generating a spreadsheet corresponding to the to-be-recognized image according to the cell position information respectively corresponding to the at least one target object.

According to a second aspect of the present disclosure, a table generating apparatus is provided, including:
a property recognizing unit, configured to recognize at least one table object in a to-be-recognized image and obtain a table property respectively corresponding to the at least one table object; where the table property of any table object includes a cell property or a non-cell property;
an object determining unit, configured to determine at least one target object with the cell property in the at least one table object;
a region determining unit, configured to determine a cell region respectively corresponding to the at least one target object and obtain cell position information respectively corresponding to the at least one target object;
a spreadsheet generating unit, configured to generate a spreadsheet corresponding to the to-be-recognized image according to the cell position information respectively corresponding to the at least one target object.

According to a third aspect of the present disclosure, an electronic device is provided, including:
at least one processor; and a memory communicatively connected with the at least one processor; where,
the memory stores instructions executable by the at least one processor, and the instructions are executed by the at least one processor to enable the at least one processor to execute the method described in the first aspect.

According to a fourth aspect of the present disclosure, a non-transitory computer-readable storage medium having computer instructions stored thereon is provided, where the computer instructions are used to cause a computer to execute the method described in the first aspect.

According to a fifth aspect of the present disclosure, a computer program product is provided. The computer program product includes a computer program, and the computer program is stored in a readable storage medium. At least one processor of an electronic device is capable of reading the computer program from the readable storage medium, and the at least one processor executes the computer program to cause the electronic device to execute the method described in the first aspect.

According to the technical solutions of the present disclosure, by recognizing a table property of at least one table object in a to-be-recognized image so as to utilize at least one target object with a cell property to recognize a cell region, cells in the to-be-recognized image can be recognized accurately, and effective cell position information can be obtained; then a spreadsheet of the to-be-recognized image is generated according to the cell position information respectively corresponding to the at least one target object. By taking cells as basis of recognition, more accurate recognition results can be obtained and recognition precision of the spreadsheet can be improved.

It should be understood that the content described in this section is not intended to identify key or important features of embodiments of the present disclosure, nor is it intended to limit the scope of the present disclosure. Other features of the present disclosure will be easily understood through the following description.

### BRIEF DESCRIPTION OF DRAWINGS

The accompanying drawings are used to better understand the solutions, and do not limit the present disclosure. In the accompanying drawings:
FIG. 1 is a schematic diagram of a network architecture according to an embodiment of the present disclosure.
FIG. 2 is a schematic diagram of a table generating method according to a first embodiment of the present disclosure.
FIG. 3 is a flow chart of another table generating method according to a second embodiment of the present disclosure.
FIG. 4 is a flow chart of yet another table generating method according to a third embodiment of the present disclosure.
FIG. 5 is a schematic diagram of feature fusion provided according to an embodiment of the present disclosure.
FIG. 6 is a block diagram of a table generating apparatus for implementing a table generating method provided by a fourth embodiment of the present disclosure.
FIG. 7 is a block diagram of an electronic device for implementing a table generating method of an embodiment of the present disclosure.

### DESCRIPTION OF EMBODIMENTS

The following describes exemplary embodiments of the present disclosure in combination with the accompanying drawings, in which various details of the embodiments of the present disclosure are included to facilitate understanding, and they shall be considered as merely exemplary. Therefore, those skilled in the art should realize that various changes and modifications can be made to the embodiments described herein without departing from the scope of the present disclosure. Similarly, for the sake of clarity and conciseness, the description of well-known functions and structures is omitted in the following.

The present disclosure provides a table generating method and apparatus, an electronic device, a storage medium and a product, which are applied in the field of artificial intelligence, specifically in the field of computer vision and deep learning, and can be applied to scenarios of smart cities and AiFinance to achieve a purpose of improving the accuracy of table generating.

In the prior art, OCR technology may be used to recognize a spreadsheet in an image. Generally, a global threshold algorithm, a local threshold algorithm, a regional growth algorithm, a waterline algorithm, a minimum description length algorithm, a Markov random field-based algorithm and others may be used to perform preliminary binarization processing on the image. Then the image may be corrected by using an image tilt correction algorithm. A commonly used image tilt correction algorithm may be, for example, an algorithm based on a projection map, an algorithm based on Hough transform, a nearest neighbor cluster algorithm, or a vectorization algorithm. Then, text box detection is performed on the corrected image features to recognize text boxes in the image, so as to generate a spreadsheet by obtaining region images of the text boxes in the image and then recognizing text information and position information in the region image of each text box. However, due to limitations such as high computational complexity of the above algorithms and high requirements for image precision of the image to be recognized, the method of using the traditional OCR technology to obtain the text boxes by segmenting directly, recognizing the text information of the region image corresponding to each text box, and then generating the spreadsheet according to the text information of the region image corresponding to each text box, has low recognition precision and poor accuracy.

In order to solve the technical problem, the inventor found through creative research that when a spreadsheet is created, different table objects may have different table properties. For example, a table property of a first text box in a table is a header property, and an end tag may be obtained when a row of a table is generated, for example, </td> is an end tag. A table property of a table object that carries text in the table is a cell property, and the table object corresponding to each cell property may be a cell. Compared with a text box, the cell is a more basic and standard property in the spreadsheet, so the cell may be used as the basis of recognition. The cell may be recognized first, and then the spreadsheet may be recognized, which can improve recognition precision of the spreadsheet effectively. Therefore, the table property of each text box object or character object in the image to be recognized may be recognized, and then the table may be restored by using the table property of each object. Accordingly, the inventor proposes the technical solution of the present disclosure.

In an embodiment of the present disclosure, for a to-be-recognized image, at least one table object in the to-be-recognized image is recognized and respective table property of the at least one table object is obtained, where the table property may include a cell property or a non-cell property; at least one target object with the cell property in the at least one target object is determined, and then cell position information respectively corresponding to the at least one target object is determined, so as to realize determination of a cell where the object is located; and then a spreadsheet of the to-be-recognized image is generated according to the cell position information respectively corresponding to the at least one target object. By recognizing the table property of at least one table object in the to-be-recognized image so as to use at least one target object with the cell property to recognize a cell region, cells in the to-be-recognized image are accurately recognized, and by taking the cells as the basis of recognition, more accurate recognition results can be obtained and recognition precision of the spreadsheet can be improved.

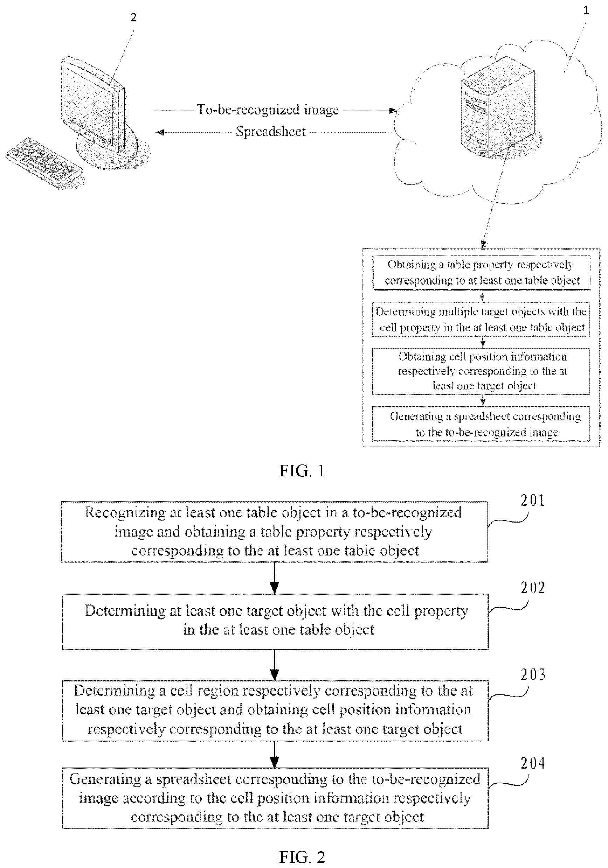

FIG. 1 is a network architecture diagram of an application of a table generating method for images provided according to the present disclosure. As shown in FIG. 1, the network architecture may include a server 1 and a user equipment 2 connected to the server 1 through a local area network or a wide area network, assuming that the user equipment is a personal computer 2. The server 1 may be, for example, a common server, a super personal computer, a cloud server, and other types of servers. The specific type of the server is not limited too much in the present disclosure. The user equipment 2 may be, for example, a terminal device such as a computer, a notebook, a tablet computer, a wearable device, a smart home appliance, a vehicle-mounted device, etc. The specific type of the user equipment is not limited too much in the embodiments of the present disclosure. The user equipment can detect a to-be-recognized image provided by a user, and send the to-be-recognized image to the server. The server can recognize at least one table object in the to-be-recognized image and obtain a table property respectively corresponding to the at least one table object. The table property of any table object is a cell property or a non-cell property. At least one target object with the cell property in the at least one table object is determined, so that a cell region respectively corresponding to the at least one target object can be determined, and cell position information respectively corresponding to the at least one target object can be obtained. Then a spreadsheet corresponding to an object to be recognized is generated according to the cell position information respectively corresponding to the at least one target object. By taking cells as the basis for recognition, more accurate recognition results can be obtained and the recognition precision of the spreadsheet can be improved.

The table generating method provided by the embodiment of the present disclosure can be applied to various application scenarios, such as education, smart cities, AiFinance, smart transportation, or smart insurance, etc. Documents, files and others saved in form of paper are converted into a form of image by electronic means such as scanners. In order to query or investigate various documents to improve efficiency of using data, it is necessary to recognize content in an image as a table that can be stored by a computer and the like, and then to build an index according to image and table information. Usually, OCR technology can be used to recognize table content in the image.

The technical solutions of the embodiments of the present disclosure will be described in detail below with reference to the accompanying drawings.

As shown in FIG. 2, FIG. 2 is a flowchart of an embodiment of a table generating method provided in a first embodiment of the present disclosure. The executive entity of the table generating method is a table generating apparatus. The table generating apparatus may be located in an electronic device. Then the method can include the following steps.

201: Recognizing at least one table object in a to-be-recognized image and obtaining a table property respectively corresponding to the at least one table object.

The table property of any table object includes a cell property or a non-cell property.

The table generating method provided in the embodiment may be applied to an electronic device. For example, the electronic device may be a computer, a super personal computer, a notebook computer, a cloud server, a common server, etc. The specific type of the electronic device is not limited too much in the present disclosure.

The to-be-recognized image may include a table image. The table image may not be processed by a computer program. At least one table object in the to-be-recognized image can be recognized, and then a table in the table image can be restored by using the table object.

In an implementation, in addition to the table object, the to-be-recognized image may also include a non-table object, for example, a logo object, an object such as a cup, a small animal, a person, etc. In the present disclosure, only table object in the table image is processed. After the non-table object is recognized, the non-table object may be restored, and the recognition principle and display manner thereof are the same as those in the prior art, which will not be repeated here for the sake of brevity.

Any table object may have corresponding table property. The table property of any table object may be either cell property or non-cell property. In the Http protocol, the cell property may be represented by <td> identifier. The non-cell property may include at least one property. For example, row <tr> property, </td> property, header property and the like may all be classified into the non-cell property.

202: Determining at least one target object with the cell property in the at least one table object.

The at least one target object may be an object who is selected to be processed from the at least one table object and whose table property is the cell property. Specifically, at least one target object whose table property is the cell property may be selected from the at least one table object according to the respective table property of the at least one table object. The target object may be obtained by detecting a character string object in the to-be-recognized image, and a character string is used as a detection target, so as to obtain at least one target object by detection.

The target object may be a character object or a text box object. The character object may be a word obtained by using a space as a recognition end condition in the string. For example, CASE NAME may include two character objects, i.e. CASE and NAME. The text box object is a text box where each character string is located, the text box being obtained by taking a character string region where the character string is located as a recognition condition. For example, assuming that a text box of CASE NAME is (v1, v2, v3, v4), the text box (v1, v2, v3, v4) may be a text box object.

203: Determining a cell region respectively corresponding to the at least one target object and obtaining cell position information respectively corresponding to the at least one target object.

The cell region respectively corresponding to the at least one target object may be the cell region where the at least one target object is located respectively. Assuming that the cell region is a rectangle, the cell position information may be upper left and lower right coordinates of the rectangle. In this case, the cell position information is position coordinates of a cell where the target object is located in the to-be-recognized image.

204: Generating a spreadsheet corresponding to the to-be-recognized image according to the cell position information respectively corresponding to the at least one target object.

In an implementation, generating the spreadsheet corresponding to the to-be-recognized image according to the cell position information respectively corresponding to the at least one target object may include: performing, according to the cell position information respectively corresponding to the at least one target object, de-duplication processing on target objects with the same cell position information in the at least one target object to obtain at least one piece of target position information, so as to generate the spreadsheet corresponding to the to-be-recognized image according to the at least one piece of target position information and text information corresponding to a cell of the at least one piece of target position information.

In the embodiment of the present disclosure, for the to-be-recognized image, at least one table object in the to-be-recognized image is recognized and respective table property of the at least one table object is obtained; then at least one target object with the cell property in the at least one table object is determined by using the table property respectively corresponding to the at least one table object, and then cell position information respectively corresponding to the at least one target object is determined, so as to realize determination of the cell where the object is located; and then the spreadsheet of the to-be-recognized image is generated according to the cell position information respectively corresponding to the at least one target object. By recognizing the table property of at least one table object in the to-be-recognized image so as to use at least one target object with the cell property to recognize the cell region, cells in the to-be-recognized image are accurately recognized, and by taking the cells as the basis of recognition, more accurate recognition results can be obtained and recognition precision of the spreadsheet can be improved.

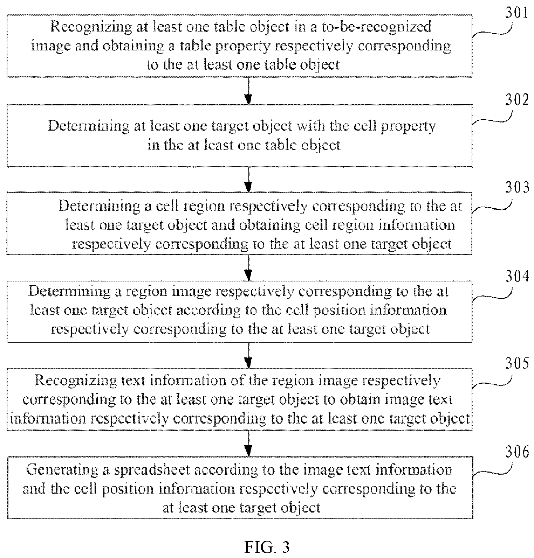

In order to recognize the cells in the table accurately, when generating the spreadsheet corresponding to the to-be-recognized image according to the cell position information respectively corresponding to at least one target object, an image recognition method for a cell region may be used for recognition. Specifically, as shown in FIG. 3, which is a flowchart of a table generating method according to a second embodiment of the present disclosure, the method can include the following steps.

301: Recognizing at least one table object in a to-be-recognized image and obtaining a table property respectively corresponding to the at least one table object.

The table property of any table object is a cell property or a non-cell property.

Some steps in this embodiment are the same as some steps in the above embodiment, and will not be repeated here for the sake of brevity.

302: Determining at least one target object with the cell property in the at least one table object.

303: Determining a cell region respectively corresponding to the at least one target object and obtaining cell region information respectively corresponding to the at least one target object.

304: Determining a region image respectively corresponding to the at least one target object according to the cell position information respectively corresponding to the at least one target object.

In an implementation, determining the region image respectively corresponding to the at least one target object according to the cell position information respectively corresponding to the at least one target object may include: extracting, according to the cell position information respectively corresponding to the at least one target object, a region image corresponding to each of the cell position information from the to-be-recognized image to obtain the region image respectively corresponding to at least one target object.

The region image may be a partial image corresponding to the cell region extracted from the to-be-recognized image.

305: Recognizing text information of the region image respectively corresponding to the at least one target object to obtain text information respectively corresponding to the at least one target object.

In an implementation, recognizing the text information of the region image respectively corresponding to the at least one target object to obtain the text information respectively corresponding to the at least one target object may include: performing recognition on the region image respectively corresponding to the at least one target object by using a text recognition algorithm to obtain the text information respectively corresponding to at least one target object. Specifically, any region image may be input into the text recognition algorithm, and the text recognition algorithm may be used to recognize and obtain text information of the region image.

The text recognition algorithm may be any text recognition algorithm in the prior art for recognizing the text information of the region image accurately, which for example, may be a recognition algorithm based on machine learning such as CRNN (Convolutional Recurrent Neural Network) or FOTS (Fast Oriented Text Spotting).

306: Generating a spreadsheet according to the text information and the cell position information respectively corresponding to the at least one target object.

The spreadsheet may be generated according to the text information and cell position information respectively corresponding to the at least one target object. Specifically, a blank table may be generated, and corresponding text information may be filled into the blank table according to the respective cell position information of the at least one target object. The blank table may be generated according to a cell structure indicated by the cell position information respectively corresponding to the at least one target object.

In this embodiment, the table property respectively corresponding to the at least one table object can be obtained by recognizing at least one table object in the to-be-recognized image. The table property of any table object is the cell property or the non-cell property, so that at least one target object with the cell property in the at least one table object is determined. Further, the cell region respectively corresponding to the at least one target object can be determined, and the cell position information respectively corresponding to the at least one target object can be obtained. By recognizing the cell region, accurate cell position information can be obtained. Then the region image respectively corresponding to the at least one target object is determined according to the cell position information respectively corresponding to the at least one target object, so as to recognize the text information of the region image respectively corresponding to the at least one target object to obtain the text information respectively corresponding to the at least one target object, thereby obtaining the accurate text information. Then the spreadsheet is generated according to the text information and cell position information respectively corresponding to the at least one target object. By using the accurate generating of the text information and cell position information, the obtained text information of each target object has a higher matching degree with the cell position information, thereby completing the accurate generating of the spreadsheet and ensuring the accuracy of the spreadsheet.

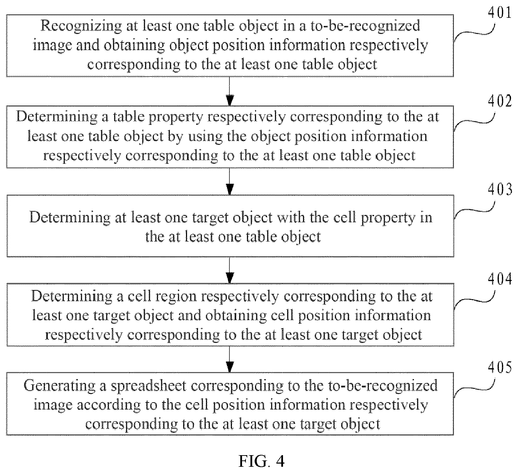

In addition to using the image recognition method to recognize cell content, more accurate recognition can be performed for the cell content on the basis of OCR recognition. As shown in FIG. 4, which is a flowchart of a table generating method according to a third embodiment of the present disclosure, the method can include the following steps.

401: Recognizing at least one table object in a to-be-recognized image and obtaining object position information respectively corresponding to the at least one table object.

Some steps in this embodiment are the same as some steps in the above embodiment, and will not be repeated here for the sake of brevity.

The object position information may be position information formed for a region that can cover the table object. The object position information may include coordinate position information of a rectangle, and the rectangle may be a rectangular region covering the table object. Object text information of any table object may be text information in the position corresponding to the coordinate position information of the table object.

In an implementation, an existing OCR technology may be used to recognize at least one table object in the to-be-recognized image, and obtain the object position information and the object text information respectively corresponding to the at least one table object. In this embodiment, based on the existing OCR technology, a table structure is further analyzed by using a recognition result, i.e. the object position information and the object text information respectively corresponding to the at least one table object, so that the table structure is used to restore the table more accurately.

402: Determining a table property respectively corresponding to the at least one table object by using the object position information respectively corresponding to the at least one table object.

The table property of any table object is a cell property or a non-cell property.

In an implementation, determining the table property respectively corresponding to the at least one table object by using the object position information respectively corresponding to the at least one table object includes: analyzing and processing a table structure of the at least one table object by using the object position information respectively corresponding to the at least one table object to obtain the table property respectively corresponding to the at least one table object.

403: Determining at least one target object with the cell property in the at least one table object.

404: Determining a cell region respectively corresponding to the at least one target object and obtaining cell position information respectively corresponding to the at least one target object.

405: Generating a spreadsheet corresponding to the to-be-recognized image according to the cell position information respectively corresponding to the at least one target object.

In this embodiment, after recognizing at least one table object in the to-be-recognized image, the object position information and the object text information respectively corresponding to the at least one table object can be obtained. Then the table property respectively corresponding to the at least one table object can be determined by using the object position information and the object text information respectively corresponding to the at least one table object. Thereby, at least one target object with the cell property in the at least one table object is determined. After that, the cell region respectively corresponding to the at least one target object is determined, and the cell position information respectively corresponding to the at least one target object is obtained. The spreadsheet corresponding to the to-be-recognized image is generated according to the cell position information respectively corresponding to the at least one target object. By recognizing the object position information and the object text information respectively corresponding to at least one table object in the to-be-recognized image, the table structure of the to-be-recognized image is analyzed by using the object position information and the object text information, and the respective table property of the at least one target object is obtained. Through the accurate analysis of the table structure, accurate table property of each target object can be obtained, and then the table property can be used to restore the table accurately, which ensures improvement of accuracy of a restoration result.

Determining the table property respectively corresponding to the at least one table object by using the object position information respectively corresponding to the at least one table object may include:
extracting a target feature respectively corresponding to the at least one table object based on the object position information respectively corresponding to the at least one table object;
inputting the target feature respectively corresponding to the at least one table object into a property classification model to obtain the table property respectively corresponding to at least one table object.

In an implementation, the property classification model may be a deep neural network model, such as a decoder of a deep self-attention model. The target feature respectively corresponding to the at least one table object may be obtained by encoding the object text information and the object position information respectively corresponding to the at least one table object by using an encoder of the deep self-attention model. The target feature respectively corresponding to the at least one table object may be obtained by using the decoder of the deep self-attention model. Inputting the target feature respectively corresponding to the at least one table object into the property classification model to obtain the table property respectively corresponding to the at least one table object may include: inputting the target feature respectively corresponding to the at least one table object into the decoder of the deep self-attention model to obtain the table property respectively corresponding to at least one table object.

The encoder and decoder of the deep self-attention model may be obtained by training. Specific training steps may include: determining at least one training sample, where each training sample corresponds to a correct property identifier; by taking a training result being the correct property identifier respectively corresponding to the at least one training sample as a training target, using the at least one training sample to train and obtain respective model parameters of the encoder and the decoder of the deep self-attention model.

In the training process, manners of extracting the target feature of each training sample and using the target feature of each training sample to determine the property of the table object is the same as the manners of extracting and classifying the at least one table object in the embodiment of the present disclosure, which will not be repeated here.

The table property may be represented by a table property identifier, for example, <tr>, <td> and the like may be represented as a table property. The specific representation of the table property belongs to the prior art, for example, the http protocol may recognize the table property directly and render the table according to the table property. The table property may be used to determine the table structure.

Further, in an implementation, extracting the target feature respectively corresponding to the at least one table object based on the object position information respectively corresponding to the at least one table object may include:
extracting an object feature respectively corresponding to the at least one table object;
extracting a region feature respectively corresponding to the at least one table object based on the object position information respectively corresponding to the at least one table object;
performing feature splicing processing on the object feature and the region feature of any table object to obtain multi-modal features of the table object, so as to obtain multi-modal features respectively corresponding to the at least one table object;
inputting the multi-modal features respectively corresponding to at least one table object into a feature fusion model to obtain the target feature respectively corresponding to the at least one table object.

The feature fusion model may be a deep neural network model, such as an encoder of a deep self-attention model. Inputting the multi-modal features respectively corresponding to the at least one table object into the feature fusion model to obtain the target feature respectively corresponding to the at least one table object may include: inputting the multi-modal features respectively corresponding to the at least one table object into the encoder of the deep self-attention model to obtain the target feature respectively corresponding to the at least one table object.

In an implementation, extracting the region feature respectively corresponding to the at least one table object based on the object position information respectively corresponding to the at least one table object may include: inputting the object position information respectively corresponding to the at least one table object into a feature conversion model to obtain the region feature respectively corresponding to the at least one table object.

The feature conversion model may be a Word2Vec (word embedding, word vector) model, and the extracted region feature respectively corresponding to the at least one table object may be a region word vector respectively corresponding to the at least one table object. The vector length of the region word vector of each table object is equal, and the vector length may be preset.

In addition, the feature conversion model may also be other deep neural network models, such as Glove (Global vectors for word representation, word representation model with count-based overall statistics) and so on.

It should be noted that any model described in the present disclosure is only a detailed description of each model type, and should not constitute a specific limitation to the technical solutions of the present disclosure. Other models in the field applicable to the technical solutions of the present disclosure also belong to the protection content of the present disclosure.

In addition to modal features corresponding to two modal types including the object feature and the region feature, modal features of other modal types may also be recognized to obtain more modal features and realize comprehensive recognition of more features, so as to increase comprehensiveness of multi-modal feature expression by the modal types, thereby promoting improvement of recognition efficiency and recognition accuracy.

After extracting the region feature respectively corresponding to the at least one table object based on the object position information respectively corresponding to the at least one table object, the method may also include:
extracting a modal feature of a preset modal type which respectively corresponds to the at least one table object based on the to-be-recognized image;

Performing feature splicing on the object feature and the region feature of any table object to obtain the multi-modal features of the table object, so as to obtain the multi-modal features respectively corresponding to the at least one table object may include:
performing feature splicing on the object feature and the region feature of any table object and the modal feature of the modal type which corresponds to the table object to obtain the multi-modal features of the table object, so as to obtain the multi-modal features respectively corresponding to the at least one table object.

The at least one table object may include at least one text box object and/or at least one character object.

In one possible design, the at least one table object may include at least one text box object.

Extracting the object feature respectively corresponding to the at least one table object may include:
extracting an image feature of the to-be-recognized image;
extracting a region image feature respectively corresponding to the at least one table object from the image feature according to the object position information respectively corresponding to the at least one table object;
determining the region image feature of any table object as the object feature of the table object to obtain the object feature respectively corresponding to the at least one table object.

In an implementation, extracting the image feature of the to-be-recognized image may include: inputting the to-be-recognized image into a convolutional neural network, and obtaining the image feature of the to-be-recognized image by calculation. In practical applications, the convolutional neural network may be a classic convolutional neural network, such as ResNet (Deep residual network), VGG (Visual Geometry Group Network), MobileNets (Efficient Convolutional Neural Networks for Mobile Vision Applications), etc.

In another possible design, the at least one table object includes at least one character object; extracting the object feature respectively corresponding to the at least one table object includes:
recognizing object text information respectively corresponding to the at least one table object in the to-be-recognized image;
performing word vector extraction on the object text information respectively corresponding to the at least one table object to obtain the object feature respectively corresponding to the at least one table object.

Performing word vector extraction on the object text information respectively corresponding to the at least one table object to obtain the object feature respectively corresponding to the at least one table object may include: inputting the object text information respectively corresponding to the at least one table object into a word vector extraction model to obtain the object feature respectively corresponding to the at least one table object.

The word vector extraction model may be a Word2Vec (word embedding, word vector) model, and the extracted object feature respectively corresponding to the at least one table object may be a text word vector respectively corresponding to the at least one table object. The vector length of the text word vector of each table object is equal, and the vector length may be preset.

In addition, the word vector extraction model may also be a word vector model of other deep neural networks, such as Glove (Global vectors for word representation, word representation model with count-based overall statistics) and so on.

When the at least one table object includes at least one text box object and at least one character object simultaneously, a manner of recognizing the object feature of the at least one text box object may refer to the manner of recognizing at least one text box object in the above embodiments, and a manner of recognizing the object feature of the at least one character object may refer to the manner of recognizing at least one character object in the above embodiments, which will be not repeated here for the sake of brevity.

When the at least one table object includes at least one text box object and at least one character object simultaneously, the at least one character object and the at least one text box object may be arranged side by side, so that multi-modal features respectively corresponding to the at least one character object and multi-modal features respectively corresponding to the at least one text box object are input into the feature fusion model simultaneously in the side-by-side arrangement, to obtain the target feature respectively corresponding to the at least one table object.

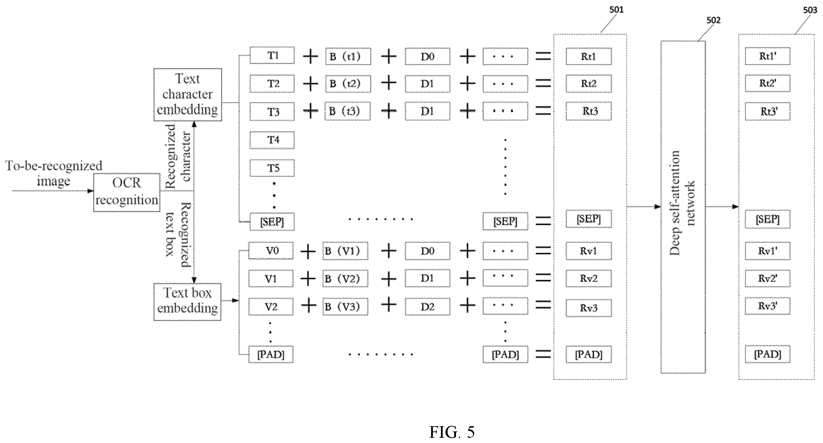

Referring to FIG. 5, it is assumed that recognition is performed on the to-be-recognized image using the OCR technology to obtain that: object features corresponding to at least one character object respectively are T1, T2, T3, ..., Tn, [SEP], where n is a positive integer greater than 1; object features corresponding to at least one text box object respectively are V1, V2, V3, ..., Vm, [PAD], where m is a positive integer greater than 1. Region features corresponding to at least one character object respectively may be expressed as: B(t1), B(t2), B(t3)..., B(tn), [SEP]. Region features corresponding to at least one text box object respectively may be expressed as: B(v1), B(v2), B(v3)..., B(vm), [SEP]. Modal features corresponding to other modal types are, for example, table identification features, D0, D1, ..., Dm. There may be more than two character objects with the same table identification feature. Weighting calculation is performed on the features of the above multiple modal types, such as mean value calculation and the like, to obtain multi-modal features 501 respectively corresponding to at least one table object by calculation: [Rt1, Rt2, Rt3, ..., Rtn, [SEP], Rv1, Rv2, Rv3, ..., Rvm, [PAD]].

After that, the multi-modal features 501: [Rt1, Rt2, Rt3, ..., Rtn, [SEP], Rv1, Rv2, Rv3, ..., Rvm, [PAD]] may be input into the feature fusion model, such as a deep self-attention network 502 shown in FIG. 5, to obtain target features 503 respectively corresponding to at least one table object: [Rt1', Rt2', Rt3',..., Rtn', [SEP], Rv1', Rv2', Rv3', ..., RVm', [PAD]]. In practical applications, in addition to the respective multi-modal features of at least one table object, the input to the feature fusion model may also include table structure features, such as [SEP] feature, [PAD] feature, etc. A target feature obtained by performing feature fusion on the [SEP] feature is still a table structure feature, for example, a [SEP] feature is still obtained through performing feature fusion processing on the [SEP] feature input. The table property obtained by table structure feature recognition is generally a non-cell property. For example, a table end property </td> may be obtained by performing table property recognition on the [SEP] feature, where </td> is a non-cell property.

After obtaining the multi-modal features, the cell position information of the target object may be recognized by using the multi-modal features. Determining the cell region respectively corresponding to the at least one target object and obtaining the cell position information respectively corresponding to the at least one target object may include:
determining multi-modal features respectively corresponding to the at least one target object based on the multi-modal feature respectively corresponding to the at least one table object;
inputting the multi-modal features respectively corresponding to the at least one target object to a position decoder of the cell region to obtain the cell position information respectively corresponding to the at least one target object.

After obtaining the multi-modal features respectively corresponding to the at least one target object, the cell position information may be extracted from the multi-modal features respectively corresponding to the at least one target object.

In the multi-modal features, features of the table object in at least one modal type are synthesized. The table object is analyzed more comprehensively, and the obtained multi-modal features contain more comprehensive information of the table object, so that when the multi-modal features are used to extract the cell position information, more accurate cell position information can be obtained, thereby improving the accuracy of spreadsheet restoration.

Determining the multi-modal features respectively corresponding to the at least one target object based on the multi-modal features respectively corresponding to the at least one table object may include:
determining a matching object which matches any target object from the at least one table object and determining multi-modal features of the matching object as the multi-modal features of the target object to obtain the multi-modal features respectively corresponding to the at least one target object.

After obtaining at least one target object, where there may be more than two target objects belonging to the same cell region, weighting calculation is performed on the cell position information of the above target objects belonging to the same cell region to obtain more accurate cell position information corresponding to the cell region. As a possible implementation, generating the spreadsheet of the to-be-recognized image according to the cell position information respectively corresponding to the at least one target object may include:
grouping target objects with the same cell region in the at least one target object into a same obj ect group according to the table property respectively corresponding to the at least one target object to obtain at least one object group;
traversing the at least one object group to perform weighting calculation on respective cell position information of at least one target object in any object group to obtain target position information respectively corresponding to the at least one object group;
generating the spreadsheet of the to-be-recognized image according to the target position information respectively corresponding to the at least one object group.

Corresponding weights in any object group may be equal, that is, performing weighting calculation on the respective cell position information of the at least one target object may include: performing mean value calculation on the respective cell position information of the at least one target object. The obtained target position information is a calculation result of a mean value of the cell position information of the at least one target object.

In this embodiment, the at least one target object is divided into groups, so as to perform the weighting calculation on the cell position information of the target object in the same group to obtain the target position information of each object group. By performing the weighting calculation on the cell position information of the target object within the group, the obtained target position information matches the cell position better, thereby improving extraction accuracy of the cell region, and then making the obtained spreadsheet more accurate.

As an embodiment, after traversing the at least one object group to perform weighting calculation on the respective cell position information of the at least one target object in any object group to obtain the target position information respectively corresponding to the at least one object group, the method may also include:
recognizing object text information respectively corresponding to the at least one table object in the to-be-recognized image;
determining target text information of any object group according to respective object text information of at least one target object in the object group to obtain target text information respectively corresponding to the at least one object group.

Generating the spreadsheet of the to-be-recognized image according to the target position information respectively corresponding to the at least one object group may include:
generating the spreadsheet of the to-be-recognized image according to the target position information and the target text information respectively corresponding to the at least one object group.

The at least one table object includes at least one text box object. Determining the target text information of any object group according to the respective object text information of the at least one target object in the object group to obtain the target text information respectively corresponding to the at least one object group includes:
recognizing object position information and object text information respectively corresponding to the at least one text box object;
matching a corresponding target text box object for the at least one object group respectively based on the object position information respectively corresponding to the at least one text box object and the target position information respectively corresponding to the at least one object group;
determining object text information of the target text box object that matches any object group as the target text information of the object group to obtain the target text information respectively corresponding to the at least one object group.

In this embodiment, the text information of the text box object is determined as the text information of the matched cell, so that the target text information of each object group is more accurate, and the obtained target text information respectively corresponding to the at least one object group is accurate, which further improves the accuracy of table generating.

In the embodiment shown in FIG. 2, when recognizing the cell position information respectively corresponding to the at least one target object, the to-be-recognized image is segmented by using each cell position information to obtain the region image respectively corresponding to the at least one target object. Image text information of the respective region image of the at least one target object is obtained by way of region image recognition, and image text information respectively corresponding to the at least one target object is obtained. The image text information respectively corresponding to the at least one target object is obtained by way of region image recognition. While in the above embodiment, the text information corresponding to the text box is filled into the cell of the target object by using the matching relationship between the positions of the text box and the target object. Through the above two ways, the target text information of each cell can be obtained in multiple ways.

In a possible design, in order to make the text information of each cell more accurate, after obtaining the target text information respectively corresponding to the at least one object group and the image text information of the region image respectively corresponding to the at least one target object, the target text information of any object group may also be obtained through the following embodiment:
determining the image text information of the respective region image of the at least one target object in any object group, performing semantic recognition on the image text information of the respective region image of the at least one target object to obtain recognition semantic information of the object group; comparing the recognition semantic information of any object group with the target text information thereof to obtain a comparison result; and updating the target text information of the object group according to the comparison result.

The comparison result includes that a semantic meaning of the semantic recognition information is more accurate relative to the target text information or the semantic meaning of the semantic recognition information is more deviated relative to the target text information. Specifically, a semantic score or a semantic level of the above two kinds of information may be calculated, and information with a higher semantic score or a higher semantic level may be selected.

Updating the target text information of the object group according to the comparison result may include: in a case that the comparison result is that the semantic meaning of the semantic recognition information is more accurate relative to the target text information, the semantic recognition information may be used as the target text information; and in a case that the comparison result is that the semantic meaning of the semantic identification information is more deviated relative to the target text information, the original target text information is maintained.

Performing semantic recognition on the image text information of the respective region image of the at least one target object to obtain the recognition semantic information of the object group may include: combining at least one piece of text information according to a grammar rule or an arrangement order of the at least one target object to obtain the recognition semantic information of the object group. The grammar rule may be preset grammatical content, for example, may be selecting one of content of character semantics and content of a text box in a cell. For example, when the at least one target object includes character objects and a text box object, it is assumed that the character objects are CASE and NAME, and the text box object is CASE NAME. According to the sorting of the objects, the character object of CASE is located on the left of the object of NAME, and corresponding semantic text is CASE NAME, while the text box object of CASE NAME is the same as its semantic text. According to the grammar rule: selecting one of the content of the character and the content of the text box, any one of CASE NAME may be selected as the recognition semantic information.

In the above embodiments, when obtaining the at least one table object, the at least one table object may be arranged in the order from left to right and from top to bottom, and each table object has a corresponding sorting order.

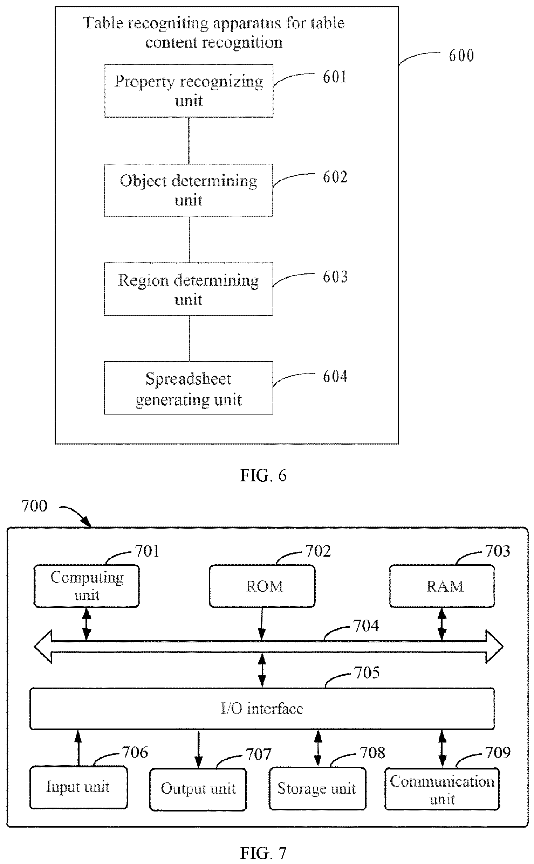

As shown in FIG. 6, which is a schematic structural diagram of a table generating apparatus provided by a fourth embodiment of the present disclosure, a table generating apparatus 600 for table content recognition of an image can include the following units:
a property recognizing unit 601, configured to recognize at least one table object in a to-be-recognized image and obtain a table property respectively corresponding to the at least one table object, where the table property of any table object includes a cell property or a non-cell property;
an object determining unit 602, configured to determine at least one target object with the cell property in the at least one table object;
a region determining unit 603, configured to determine a cell region respectively corresponding to the at least one target object and obtain cell position information respectively corresponding to the at least one target object;
a spreadsheet generating unit 604, configured to generate a spreadsheet corresponding to the to-be-recognized image according to the cell position information respectively corresponding to the at least one target object.

In the embodiment of the present disclosure, for the to-be-recognized image, at least one table object in the to-be-recognized image is recognized and the respective table property of the at least one table object is obtained; then at least one target object with the cell property in the at least one table object is determined by using the table property respectively corresponding to the at least one table object, and then cell position information respectively corresponding to the at least one target object is determined, so as to realize determination of the cell where the object is located; and then the spreadsheet of the to-be-recognized image is generated according to the cell position information respectively corresponding to the at least one target object. By recognizing the table property of at least one table object in the to-be-recognized image so as to use at least one target object with the cell property to recognize the cell region, cells in the to-be-recognized image are accurately recognized, and by taking the cells as basis of recognition, more accurate recognition results can be obtained and recognition precision of the spreadsheet can be improved.

As an embodiment, the spreadsheet generating unit 604 may include:
a region segmenting module, configured to determine a region image respectively corresponding to the at least one target object according to the cell position information respectively corresponding to the at least one target object;
a text recognizing module, configured to recognize text information of the region image respectively corresponding to the at least one target object to obtain image text information respectively corresponding to the at least one target object;
a first generating module, configured to generate a spreadsheet according to the image text information and the cell position information respectively corresponding to the at least one target object.

As an embodiment, the spreadsheet generating unit 604 may include:
an object recognizing module, configured to recognize the at least one table object in the to-be-recognized image and obtain object position information respectively corresponding to the at least one table object;
a second generating module, configured to determine the table property respectively corresponding to the at least one table object by using the object position information respectively corresponding to the at least one table object.

In a possible design, the second generating module includes:
a feature recognizing sub-module, configured to extract a target feature respectively corresponding to the at least one table object based on the object position information respectively corresponding to the at least one table object;
an object classifying sub-module, configured to input the target feature respectively corresponding to the at least one table object into a property classification model to obtain the table property respectively corresponding to the at least one table object.

In some embodiments, the feature recognizing sub-module includes:
a first extracting unit, configured to extract an object feature respectively corresponding to the at least one table object;
a second extracting unit, configured to extract a region feature respectively corresponding to the at least one table object;
a feature splicing unit, configured to perform feature splicing processing on the object feature and the region feature of any table object to obtain multi-modal features of the table object, so as to obtain multi-modal features respectively corresponding to the at least one table object;
a feature fusion unit, configured to input the multi-modal features respectively corresponding to the at least one table object into a feature fusion model to obtain the target feature respectively corresponding to the at least one table object.

As a possible implementation, the apparatus also includes:
a third extracting unit, configured to extract a modal feature of a preset modal type which respectively corresponds to the at least one table object based on the to-be-recognized image;
the feature splicing unit includes:
   a feature splicing module, configured to perform feature splicing on the object feature and the region feature of any table object and the modal feature of the modal type which corresponds to the table object to obtain the multi-modal features of the table object, so as to obtain the multi-modal features respectively corresponding to the at least one table object.

In a possible design, the at least one table object includes at least one text box object; the first extracting unit may include:
a first extracting module, configured to extract an image feature of the to-be-recognized image;
a second extracting module, configured to extract a region image feature respectively corresponding to the at least one table object from the image feature according to the object position information respectively corresponding to the at least one table object;
a feature determining module, configured to determine the region image feature of any table object as the object feature of the table object to obtain the object feature respectively corresponding to the at least one table object.

In another possible design, the at least one table object includes at least one character object; the apparatus may also include:
a text recognizing unit, configured to recognize object text information respectively corresponding to the at least one table object in the to-be-recognized image.

The first extracting unit may include:
a third extracting unit, configured to perform word vector extraction on the object text information respectively corresponding to the at least one table object to obtain the object feature respectively corresponding to the at least one table object.

As an embodiment, the region determining unit includes:
an object determining module, configured to determine multi-modal features respectively corresponding to the at least one target object based on the multi-modal features respectively corresponding to the at least one table object;
a position determining module, configured to input the multi-modal features respectively corresponding to the at least one target object into a position decoder of the cell region to obtain the cell position information respectively corresponding to the at least one target object.

In some embodiments, the object determining module includes:
an object matching sub-module, configured to determine a matching object which matches any target object from the at least one table object and determine multi-modal features of the matching object as the multi-modal features of the target object to obtain the multi-modal features respectively corresponding to the at least one target object.

As an embodiment, the spreadsheet generating unit 604 may include:
an object grouping module, configured to group target objects with the same cell region in the at least one target object into a same object group according to the table property respectively corresponding to the at least one target object to obtain at least one object group;
a position weighting module, configured to traverse the at least one object group to perform weighting calculation on respective cell position information of at least one target object in any object group to obtain target position information respectively corresponding to the at least one object group;
a third generating module, configured to generate the spreadsheet of the to-be-recognized image according to the target position information respectively corresponding to the at least one object group.

The apparatus may further include:
a text recognizing unit, configured to recognize object text information respectively corresponding to the at least one table object in the to-be-recognized image;
a text determining unit, configured to determine target text information of any object group according to respective object text information of at least one target object in the object group to obtain target text information respectively corresponding to the at least one object group.

The third generating module may specifically configured to:
generate the spreadsheet of the to-be-recognized image according to the target position information and the target text information respectively corresponding to the at least one object group.

In a possible design, the at least one table object includes at least one text box object; the text determining module includes:
a first recognizing sub-module, configured to recognize object position information respectively corresponding to the at least one text box object;
an object matching sub-module, configured to match a corresponding target text box object for the at least one object group respectively based on the object position information respectively corresponding to the at least one text box object and the target position information respectively corresponding to the at least one object group;
an information determining sub-module, configured to determine object text information of the target text box object that matches any object group as the target text information of the object group to obtain the target text information respectively corresponding to the at least one object group.

In the technical solutions of the present disclosure, acquisition, storage, application and others of a user's personal information involved all comply with the provisions of relevant laws and regulations, and do not violate public order and good customs.

According to embodiments of the present disclosure, an electronic device, a readable storage medium and a computer program product are further provided.

According to an embodiment of the present disclosure, a computer program product is further provided. The program product includes a computer program, and the computer program is stored in a readable storage medium. At least one processor of an electronic device is capable of reading the computer program from the readable storage medium, and the at least one processor executes the computer program to cause the electronic device to execute the solution provided by any of the above embodiments.

FIG. 7 shows a schematic block diagram of an exemplary electronic device 700 which can be used for implementing an embodiment of the present disclosure. The electronic device is intended to represent various forms of digital computers, such as a laptop computer, a desktop computer, a workstation, a personal digital assistant, a server end, a blade server end, a mainframe computer, and other suitable computers. The electronic device may also represent various forms of mobile apparatuses, such as a personal digital assistant, a cellular phone, a smart phone, a wearable device, and other similar computing apparatuses. Components shown herein, connections and relationships thereof, as well as functions thereof are merely examples and are not intended to limit implementations of the present disclosure described and/or claimed herein.

As shown in FIG.7, the device 700 includes a computing unit 701, which can execute various appropriate actions and processing based on a computer program stored in a read only memory (ROM) 702 or a computer program loaded from a storage unit 708 to a random access memory (RAM) 703. In the RAM 703, various programs and data required for operations of the device 700 can also be stored. The computing unit 701, the ROM 702, and the RAM 703 are connected to each other through a bus 704. An input/output (I/O) interface 705 is also connected to the bus 704.

At least one of components in the device 700 is connected to the I/O interface 705, including: an input unit 706, such as a keyboard, a mouse, etc.; an output unit 707, such as various types of displays, speakers, etc.; the storage unit 708, such as a disk, an optical disc, etc.; and a communication unit 709, such as a network card, a modem, a wireless communication transceiver, etc. The communication unit 709 allows the device 700 to exchange information/data with other devices through a computer network such as the Internet and/or various telecommunication networks.

The computing unit 701 may be various general-purpose and/or special-purpose processing components with processing and computing capabilities. Some examples of the computing unit 701 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 701 executes the various methods and processing described above, for example, a table generating method. For example, in some embodiments, the table generating method may be implemented as a computer software program, which is tangibly contained in a machine-readable medium, such as the storage unit 708. In some embodiments, part or all of the computer program may be loaded and/or installed on the device 700 via the ROM 702 and/or the communication unit 709. When the computer program is loaded into the RAM 703 and executed by the computing unit 701, one or more steps of the table generating method described above can be executed. Alternatively, in other embodiments, the computing unit 701 may be configured to execute the table generating method in any other suitable manner (for example, by means of firmware).

The various implementations of the systems and technologies described herein can be implemented in a digital electronic circuit system, an integrated circuit system, a field programmable gate array (FPGA), an application specific integrated circuit (ASIC), an application-specific standard product (ASSP), a system on chip (SOC), a complex programmable logic device (CPLD), computer hardware, firmware, software, and/or a combination thereof. These various implementations may include: being implemented in one or more computer programs, the one or more computer programs may be executed and/or interpreted on a programmable system including at least one programmable processor, where the programmable processor may be a dedicated or general-purpose programmable processor that can receive data and instructions from a storage system, at least one input apparatus, and at least one output apparatus, and can transmit data and instructions to the storage system, the at least one input apparatus, and the at least one output apparatus.

The program codes used to implement the methods of the present disclosure can be written in any combination of one or more programming languages. These program codes can be provided to the processors or controllers of general-purpose computers, special-purpose computers, or other programmable data processing apparatuses, so that when the program codes are executed by the processors or controllers, the functions/operations specified in the flowcharts and/or block diagrams are implemented. The program codes can be executed entirely on a machine, partly executed on the machine, as an independent software package partly executed on the machine and partly executed on a remote machine, or entirely executed on the remote machine or server end.

In the context of the present disclosure, a machine-readable medium may be a tangible medium, which may contain or store a program for use by an instruction execution system, apparatus, or device or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination of the foregoing. More specific examples of the machine-readable storage medium may include electrical connections based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

In order to provide interaction with a user, the systems and technologies described herein may be implemented on a computer, where the computer has: a display apparatus (e.g., a CRT (cathode ray tube) or LCD (liquid crystal display) monitor) for displaying information to the user; and a keyboard and a pointing apparatus (e.g., a mouse or a trackball), through which the user can provide inputs to the computer. Other types of apparatuses may also be used to provide interaction with the user; for example, the feedback provided to the user may be any form of sensing feedback (such as, visual feedback, auditory feedback, or tactile feedback); and the input from the user may be received in any form (including acoustic input, voice input, tactile input).

The systems and technologies described here may be implemented in a computing system (e.g., a data server) including a back-end component, or in a computing system (e.g., an application server) including a middleware component, or in a computing system (e.g., a user computer having a graphical user interface or a web browser, through which the user can interact with the implementations of the systems and technologies described herein) including a front-end component, or in a computing system including any combination of the back-end component, the middleware component or the front-end component. The components of the system may be interconnected via digital data communication (e.g., a communication network) in any form or medium. Examples of the communication network include: a local area network (LAN), a wide area network (WAN) and the Internet.

A computer system may include a client and a server. The client and the server are generally located far away from each other and usually interact with each other through a communication network. A relationship between the client and the server is generated by computer programs running on corresponding computers and having a client-server relationship between each other. The server may be a cloud server, also known as a cloud computing server or a cloud host, which is a host product in a cloud computing service system to solve defects of having difficulty in management and weak business scalability in the traditional physical host and VPS (Virtual Private Server) services. The server may also be a server of a distributed system, or a server combined with block chain.

It should be understood that steps can be reordered, added or deleted by using the various forms of processes shown above. For example, the steps recited in the present disclosure can be performed in parallel, in sequence or in different orders, as long as expected results of the technical solutions disclosed in the present disclosure can be realized, and there is no limitation herein.

The above specific implementations do not limit the protection scope of the present disclosure. It should be understood by those skilled in the art that various modifications, combinations, sub-combinations and substitutions may be made according to design requirements and other factors. Any modification, equivalent replacement, improvement and the like made within the spirit and principle of the present disclosure shall be included in the protection scope of the present disclosure.

## Claims

1. A table generating method, comprising:
recognizing (201, 301) at least one table object in a to-be-recognized image and obtaining a table property respectively corresponding to the at least one table object; wherein the table property of any table object comprises a cell property or a non-cell property;
determining (202, 302, 403) at least one target object with the cell property in the at least one table object;
determining (203, 303, 404) a cell region respectively corresponding to the at least one target object and obtaining cell position information respectively corresponding to the at least one target object;
generating (204, 405) a spreadsheet corresponding to the to-be-recognized image according to the cell position information respectively corresponding to the at least one target object.

2. The method according to claim 1, wherein generating (204) the spreadsheet corresponding to the to-be-recognized image according to the cell position information respectively corresponding to the at least one target object comprises:
determining (304) a region image respectively corresponding to the at least one target object according to the cell position information respectively corresponding to the at least one target object;
recognizing (305) text information of the region image respectively corresponding to the at least one target object to obtain image text information respectively corresponding to the at least one target object;
generating (306) the spreadsheet according to the image text information and the cell position information respectively corresponding to the at least one target object.

3. The method according to claim 1, wherein recognizing (201, 301) the at least one table object in the to-be-recognized image and obtaining the table property respectively corresponding to the at least one table object comprises:
recognizing (401) object position information respectively corresponding to the at least one table object in the to-be-recognized image;
determining (402) the table property respectively corresponding to the at least one table object by using the object position information respectively corresponding to the at least one table object.

4. The method according to claim 3, wherein determining the table property respectively corresponding to the at least one table object by using the object position information respectively corresponding to the at least one table object comprises:
extracting a target feature respectively corresponding to the at least one table object based on the object position information respectively corresponding to the at least one table object;
inputting the target feature respectively corresponding to the at least one table object into a property classification model to obtain the table property respectively corresponding to the at least one table object.

5. The method according to claim 4, wherein extracting the target feature respectively corresponding to the at least one table object based on the object position information respectively corresponding to the at least one table object comprises:
extracting an object feature respectively corresponding to the at least one table object;
extracting a region feature respectively corresponding to the at least one table object based on the object position information respectively corresponding to at least one table object;
performing feature splicing processing on the object feature and the region feature of any table object to obtain multi-modal features of the table object, so as to obtain multi-modal features respectively corresponding to the at least one table object;
inputting the multi-modal features respectively corresponding to the at least one table object into a feature fusion model to obtain the target feature respectively corresponding to the at least one table object.

6. The method according to claim 5, further comprising:
extracting a modal feature of a preset modal type which respectively corresponds to the at least one table object based on the to-be-recognized image;
wherein performing feature splicing processing on the object feature and the region feature of any table object to obtain the multi-modal features of the table object, so as to obtain the multi-modal features respectively corresponding to the at least one table object comprises:
performing feature splicing on the object feature and the region feature of any table object and the modal feature of the modal type which corresponds to the table object to obtain the multi-modal features of the table object, so as to obtain the multi-modal features respectively corresponding to the at least one table object.

7. The method according to claim 5, wherein the at least one table object comprises at least one text box object; extracting the object feature respectively corresponding to the at least one table object comprises:
extracting an image feature of the to-be-recognized image;
extracting a region image feature respectively corresponding to the at least one table object from the image feature according to the object position information respectively corresponding to the at least one table object;
determining the region image feature of any table object as the object feature of the table object to obtain the object feature respectively corresponding to the at least one table object.

8. The method according to claim 5, wherein the at least one table object comprises at least one character object; the method further comprises:
recognizing object text information respectively corresponding to the at least one table object in the to-be-recognized image;
wherein extracting the object feature respectively corresponding to the at least one table object comprises:
performing word vector extraction on the object text information respectively corresponding to the at least one table object to obtain the object feature respectively corresponding to the at least one table object

9. The method according to claim 5, wherein determining the cell region respectively corresponding to the at least one target object and obtaining the cell position information respectively corresponding to the at least one target object comprises:
determining multi-modal features respectively corresponding to the at least one target object based on the multi-modal features respectively corresponding to the at least one table object;
inputting the multi-modal features respectively corresponding to the at least one target object into a position decoder of the cell region to obtain the cell position information respectively corresponding to the at least one target object.

10. The method according to claim 9, wherein determining the multi-modal features respectively corresponding to the at least one target object based on the multi-modal features respectively corresponding to the at least one table object comprises:
determining a matching object which matches any target object from the at least one table object and determining multi-modal features of the matching object as the multi-modal features of the target object to obtain the multi-modal features respectively corresponding to the at least one target object.

11. The method according to any one of claims 1-10, wherein generating the spreadsheet corresponding to the to-be-recognized image according to the cell position information respectively corresponding to the at least one target object comprises:
grouping target objects with the same cell region in the at least one target object into a same object group according to the table property respectively corresponding to the at least one target object to obtain at least one object group;
traversing the at least one object group to perform weighting calculation on the respective cell position information of at least one target object in any object group to obtain target position information respectively corresponding to the at least one object group;
generating the spreadsheet of the to-be-recognized image according to the target position information respectively corresponding to the at least one object group.

12. The method according to claim 11, further comprising:
recognizing object text information respectively corresponding to the at least one table object in the to-be-recognized image;
determining target text information of any object group according to respective object text information of at least one target object in the object group to obtain target text information respectively corresponding to the at least one object group;
wherein generating the spreadsheet corresponding to the to-be-recognized image according to the cell position information respectively corresponding to the at least one target object comprises:
generating the spreadsheet of the to-be-recognized image according to the target position information and the target text information respectively corresponding to the at least one object group.

13. The method according to claim 12, wherein the at least one table object comprises at least one text box object; determining the target text information of any object group according to the respective object text information of the at least one target object in the object group to obtain the target text information respectively corresponding to the at least one object group comprises:
recognizing object position information respectively corresponding to the at least one text box object;
matching a corresponding target text box object for the at least one object group respectively based on the object position information respectively corresponding to the at least one text box object and the target position information respectively corresponding to the at least one object group;
determining object text information of the target text box object that matches any object group as the target text information of the object group to obtain the target text information respectively corresponding to the at least one object group.

14. A table generating apparatus (600), comprising:
a property recognizing unit (601), configured to recognize at least one table object in a to-be-recognized image and obtain a table property respectively corresponding to the at least one table object; wherein the table property of any table object comprises a cell property or a non-cell property;
an object determining unit (602), configured to determine at least one target object with the cell property in the at least one table object;
a region determining unit (603), configured to determine a cell region respectively corresponding to the at least one target object and obtain cell position information respectively corresponding to the at least one target object;
a spreadsheet generating unit (604), configured to generate a spreadsheet corresponding to the to-be-recognized image according to the cell position information respectively corresponding to the at least one target object.

15. A non-transitory computer-readable storage medium having computer instructions stored thereon, wherein the computer instructions are used to cause the computer to execute the method according to any one of claims 1-13.
